# EUROPEAN PATENT APPLICATION

(11) **EP 4 660 605 A1**
(43) Date of publication of application: **10.12.2025**
(21) Application number: 25180393.8
(22) Date of filing: 03.06.2025
(51) Int. Cl.: G01N 3/10, G01N 3/62

(54) **MATERIAL TESTING SYSTEMS WITH TESTING SYSTEM SENSOR VERIFICATION DEVICE**

(30) Priority: 04.06.2024 US 202463655929 P; 30.05.2025 US 202519223774
(71) Applicant: Illinois Tool Works Inc., Glenview IL 60025 (US)
(72) Inventor: SALERNO, Nicholas, Glenview, 60025 (US); BRADSHAW, Nicholas H., Glenview, 60025 (US); MANNEY, Jeffrey, Glenview, 60025 (US)
(74) Representative: HGF

(57) **Abstract**

Disclosed example testing system sensor verification devices: a shaft; a body; and a force generator having a first predetermined force response, the first force generator coupled to the shaft and the body such that actuation of the shaft in a first direction from a predetermined position causes the force generator to generate the first predetermined force response.

## Description

### RELATED APPLICATIONS

The present application claims the benefit of U.S. Provisional Patent Application Serial No. 63/655,929, filed June 4, 2024, entitled "MATERIAL TESTING SYSTEMS WITH TESTING SYSTEM SENSOR VERIFICATION DEVICE." The entirety of U.S. Provisional Patent Application Serial No. 63/655,929 is expressly incorporated herein by reference.

### TECHNICAL FIELD

The present disclosure generally relates to material testing systems and, more particularly, to material testing systems with testing system sensor verification devices.

### BACKGROUND

Material testing machines are used to test the properties (e.g., tensile/compressive strength) of various material specimens. A sensor of the material testing machine may take measurements during tests of the various material specimens, and the properties of the specimens may be evaluated based on the sensor's measurements.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to material testing systems with testing system sensor verification devices, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example material testing system, in accordance with aspects of this disclosure.
FIG. 2 shows a block diagram of the material testing system of FIG. 1, in accordance with aspects of this disclosure.
FIG. 3 is a perspective view of an example testing system sensor verification device that may be used to implement the testing system sensor verification device of FIG. 2.
FIG. 4 is a viewof the example testing system sensor verification device with a portion of the body removed.
FIG. 5 is a cross-sectional view of the example testing system sensor verification device.
FIG. 6 is a schematic diagram of another example testing system sensor verification device that may be used to implement the testing system sensor verification device of FIG. 2 using a torsion spring as a bidirectional force-generating device.
FIG. 7 is a schematic diagram of another example testing system sensor verification device that may be used to implement the testing system sensor verification device of FIG. 2 using spring as a bidirectional force-generating device coupled to a shaft via a lever.
FIG. 8 is a schematic diagram of another example testing system sensor verification device that may be used to implement the testing system sensor verification device of FIG. 2 using a hydraulic piston.
FIG. 9 is a schematic diagram of another example testing system sensor verification device that may be used to implement the testing system sensor verification device of FIG. 2 using a pneumatic piston as a force-generating device.
FIG. 10 is a schematic diagram of another example testing system sensor verification device that may be used to implement the testing system sensor verification device of FIG. 2 using an electromagnetic coil as a force-generating device.
FIG. 11 is a flowchart representative of an example method to perform test machine verification.

The figures are not necessarily to scale. Where appropriate, the same or similar reference numerals are used in the figures to refer to similar or identical elements. For example, reference numerals utilizing lettering (e.g., grip 124a, grip 124b) refer to instances of the same reference numeral that does not have the lettering (e.g., grips 124).

### DETAILED DESCRIPTION

The present disclosure relates to material testing systems that allow for testing of one or more test sensors of a material testing machine to determine whether the sensors are still working correctly. In some examples, the testing may be conducted manually, periodically, and/or automatically in response to some indication that a test sensor may be malfunctioning. In some examples, further testing using the material testing machine may be prohibited if the test results indicate that one or more of the sensors are malfunctioning. This prohibition may ensure that the tests conducted using the material testing machine remain reliable and usable, rather than being rendered untrustworthy due to malfunctioning test sensors.

Disclosed examples provide testing system sensor verification devices that can be quickly and easily used to verify whether a material testing machine (e.g., the load cells of the material testing machine) is suitable for performing force testing. For example, some disclosed testing system sensor verification devices generate repeatable static and/or dynamic force responses in response to actuation (e.g., displacement inputs to the testing system sensor verification devices). By monitoring the force responses and comparing the forces to stored or otherwise predetermined forces, the suitability of the material testing system for testing can be verified. Verification can be performed at regular or irregular intervals, and/or prior to and/or in response to particular events, to ensure that the results of force testing performed using the material testing system are accurate.

Disclosed example testing system sensor verification devices include: a shaft; a body; and a force generator having a first predetermined force response, the first force generator coupled to the shaft and the body such that actuation of the shaft in a first direction from a predetermined position causes the force generator to generate the first predetermined force response.

Some example sensor verification devices further include a first fixture interface coupled to the shaft, and a second fixture interface coupled to the body. In some example sensor verification devices, the force generator includes: a first spring having a first predetermined force response, the first force generator positioned between the actuator plate and a first location on the body such that actuation of the shaft in a first direction from a predetermined position compresses the first spring; and a second spring having a second predetermined spring constant, the second spring positioned between the actuator plate and a second location on the body such that actuation of the shaft in a second direction from the predetermined position compresses the second spring. In some such examples, the first predetermined spring constant is the same as the second predetermined spring constant. In some other examples, the first predetermined spring constant is different than the second predetermined spring constant. In some example sensor verification devices, the shaft extends through the first spring and the second spring. In some example sensor verification devices, the first spring is on an opposite side of the actuator plate from the second spring.

Disclosed example testing systems include: a frame; a first fixture and a second fixture configured to grip a specimen; an actuator configured to actuate at least one of the first fixture or the second fixture to apply a force to the specimen; a load cell configured to measure at least a portion of the force applied to the specimen by the actuator; and control circuitry configured to: control the actuator to actuate the at least one of the first fixture or the second fixture to apply the force to the specimen; and perform a load cell verification, involving: controlling the actuator to actuate the at least one of the first fixture or the second fixture while a load cell verification device is coupled to the first fixture and the second fixture; while controlling the actuator, monitor an output of the load cell to determine a force measured by the load cell; and in response to determining that the force measured by the load cell is within a predetermined range of a predetermined force associated with the load cell verification device, indicating the testing system is in suitable condition to perform at least a first type of force testing.

In some example testing systems, the control circuitry is configured to perform the load cell verification by: controlling the actuator to actuate the at least one of the first fixture or the second fixture in a first direction while monitoring the output of the load cell; and controlling the actuator to actuate the at least one of the first fixture or the second fixture in a second direction while monitoring the output of the load cell. In some example testing systems, the control circuitry is configured to monitor a tension force measured by the load cell in the first direction and monitor a compression force measured by the load cell in the second direction. In some example testing systems, the second fixture is configured to be stationary, and the actuator is configured to actuate the first fixture. In some example testing systems, the load cell is coupled to the first fixture or the second fixture.

In some example testing systems, the load cell verification device includes: a shaft; a body; and a force generator having a first predetermined force response, the first force generator coupled to the shaft and the body such that actuation of the shaft in a first direction from a predetermined position causes the force generator to generate the first predetermined force response. In some example testing systems, the load cell verification device further includes: a first fixture interface coupled to the shaft; and a second fixture interface coupled to the body.

In some example testing systems, the shaft includes an actuator plate, and the force generator includes: a first spring having a first predetermined spring constant, the first spring positioned between the actuator plate and a first location on the body such that actuation of the shaft in a first direction from a predetermined position compresses the first spring; and a second spring having a second predetermined spring constant, the second spring positioned between the actuator plate and a second location on the body such that actuation of the shaft in a second direction from the predetermined position compresses the second spring.

In some example testing systems, the first fixture is configured to couple to the first fixture interface, and the second fixture is configured to couple to the second fixture interface. In some example testing systems, the first predetermined spring constant is different than the second predetermined spring constant. In some example testing systems, the shaft extends through the first spring and the second spring. In some example testing systems, the first spring is on an opposite side of the actuator plate from the second spring.

Disclosed example methods to verify a load cell in a testing system involve: coupling a first fixture interface of a load cell verification device to a first fixture of a testing system; coupling a second fixture interface of a load cell verification device to a second fixture of a testing system; controlling, via processing circuitry, an actuator of the testing system to actuate the at least one of the first fixture or the second fixture; during or after controlling the actuator, monitoring, via the processing circuitry, an output of a load cell of the testing system to determine a force measured by the load cell; and in response to determining that the force measured by the load cell is within a predetermined range of a predetermined force associated with the load cell verification device, determining that the testing system is in suitable condition to perform at least a first type of force testing.

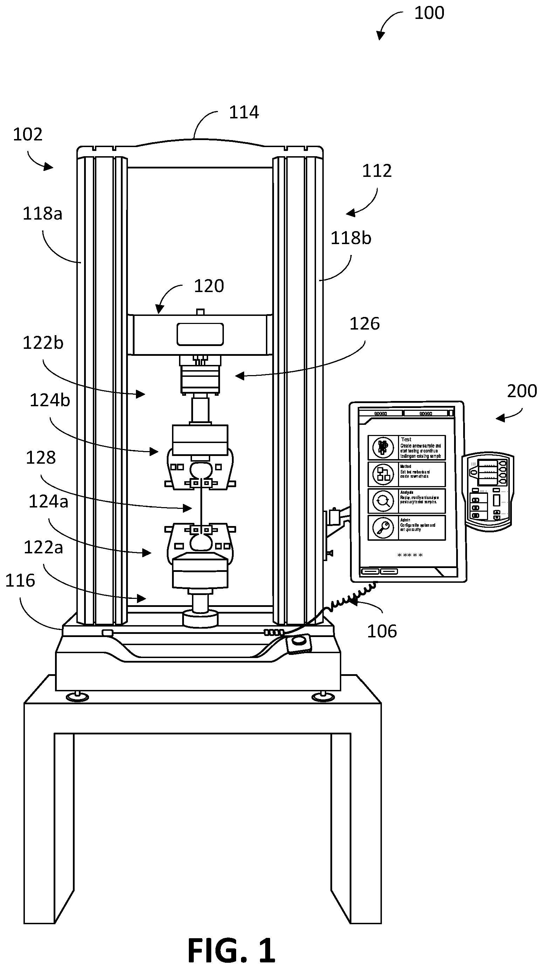

FIG. 1 shows an example material testing system 100. As shown, the material testing system 100 includes a material testing machine 102 (also known as a universal testing machine), and a computing system 200 connected to the material testing machine 102 through cable 106. While shown as being physically connected, in some examples, the connections may be wireless rather than wired.

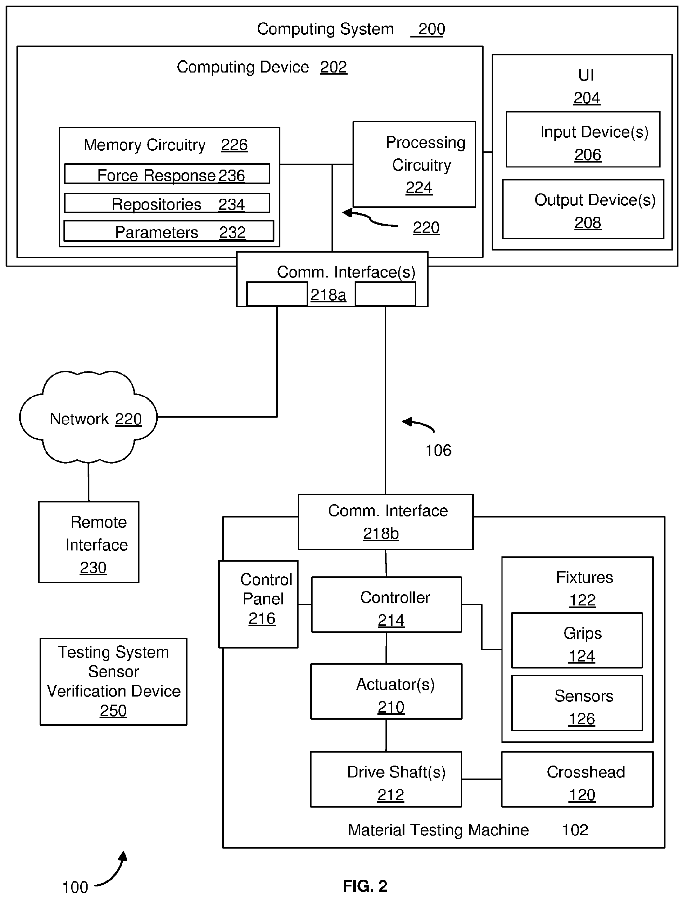

In the example of FIG. 1, the material testing machine 102 includes a frame 112. In some examples, the frame 112 provides rigid structural support for the other components of the material testing machine 102. As shown, the frame 112 comprises a top plate 114 and a bottom base 116 connected by two columns 118. In some examples, the columns 118 of the frame 112 may house guide rails and/or drive shafts 212 of the material testing machine 102 (see, e.g., FIG. 2).

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base 116 through (e.g., motorized) actuation of the drive shaft(s) 212. While one movable crosshead 120 is shown in the example of FIG. 1, in some examples, the material testing machine 102 may have multiple movable crossheads 120, and/or other movable members.

In the example of FIG. 1, a fixture 122 is attached to the bottom base 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the testing machine 102 may include more or fewer test sensors 126 and/or grips 124.

In the example of FIG. 1, the grips 124 are holding a test specimen 128. While shown as a (e.g., steel) rope, in some examples, the test specimen 128 may be some other type of material and/or component. While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor 126 may be a load cell and/or a transducer. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 200 to conduct a test method. For example, the computing system 200 may communicate with a controller 214 (see, e.g., FIG. 2) of the material testing machine 102 to conduct the test method. In some examples, an operator (or other user) may first use the computing system 200 to setup the test method, then use the computing system 200 to execute the test method, and finally use the computing system 200 to analyze the results of the test method.

FIG. 2 is a block diagram showing details of the computing system 200, as well as additional details of the material testing machine 102. In the example of FIG. 2, the example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 200) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensors 126). In some examples, the controller 214 may be configured to translate commands, control inputs, and/or test parameters (e.g., received from the computing system 200) to appropriate (e.g., electrical) signals that may be delivered to the grips 124, to thereby control (e.g., grip or release) operation of the grips 124. In some examples, the controller 214 may be configured to translate commands, control inputs, and/or parameters (e.g., received from the computing system 200) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 200.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a network interface 218b of the material testing machine 102. In some examples, the network interface 218b includes hardware, firmware, and/or software to connect the material testing machine 102 to a complementary network interface 218a of the computing system 200. In some examples, the controller 214 may receive information (e.g., commands) from the computing system 200 through the network interfaces 218, and/or send information (e.g., measurement data from sensor(s) 126) to the computing system 200 through the network interfaces 218.

In the example of FIG. 2, the computing system 200 includes a computing device 202 and a user interface (UI) 204 interconnected with one another. As shown, the UI 204 may include one or more input devices 206 configured to receive inputs from a user, and one or more output devices 208 configured to provide outputs to the user.

In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the UI 204 may output one or more representations of a material testing workflow configured to guide a user through setup, execution, and/or analysis of a test method conducted by the material testing machine 102. In some examples, the output device(s) 208 (e.g., a display screen) of the UI 204 may output one or more representations of a test method creation process configured to assist a user in easily and/or quickly generating a test method and/or material testing workflow.

In the example of FIG. 2, the example computing device 202 includes network interfaces 218a. As shown, one network interface 218a is in communication with the network interface 218b of the material testing machine 102 through cable 106. As shown, the computing system 200 further includes a network interface 218a in communication with a network 220 (e.g., the Internet). In the example of FIG. 2, the computing device 202 is in communication with a remote interface 230 through the network 220 and network interface 218a. As shown, the network interfaces 218a are electrically connected to a common electrical bus 220 of the computing device 202.

The computing device 202 further includes processing circuitry 224 connected to the common electrical bus 220. In some examples, the processing circuitry 224 may comprise one or more processors. In some examples, the processing circuitry 224 is configured to process information received from the UI 204, data importation device(s) 108, and/or material testing machine 102. In some examples, the processing circuitry 224 is configured to transmit (e.g., via network interface(s) 218a) commands and/or test parameters to the material testing machine 102. In some examples, the processing circuitry 224 is configured to output information to an operator through the UI 204. In some examples, the processing circuitry 224 is configured to execute machine readable instructions stored in memory circuitry 226.

The example computing device 202 further includes memory circuitry 226 connected to the common electrical bus 220. As shown, the memory circuitry 226 includes several parameters 232 (and/or parameter values) and/or one or more data repositories 234.

In some examples, the data repositories 234 may comprise several different data structures (e.g., databases, look up table, etc.). The data repositories 234 may store both historical data (e.g., prior workflows, test methods, parameters 232, test results, reports, prompts 602, user inputs, etc.) and current data (e.g., mappings between user inputs and parameters 232). In some examples, the historical data may be associated with timestamps and/or other data (e.g., with similar timestamps). Though shown as part of the memory circuitry 226 of the computing device 202 in the example of FIG. 2, in some examples, the repositories 234 may be separate from the computing device 202, and/or in communication with the computing device 202 (e.g., via a network interface 218a).

In some examples, the processing circuitry 224 is configured to execute the machine readable instructions of a material testing workflow to guide a user through setup, execution, and/or analysis of a test method of the material testing machine 102. In some examples, the setup (and/or creation) of the test method may involve setting values for several (e.g., test, sample, analysis, etc.) parameters 232 that define the test method and/or analysis of the tests results. In some examples, the UI 204 is configured to show (and/or otherwise output) one or more workflow screens that show and/or allow a user to manually set parameters 232 during execution of the material testing workflow.

In some examples, during the sensor testing process, one or more sensor test methods for testing the test sensor(s) 126 of the material testing machine 102 are setup and/or executed. In some examples, the test method(s) may be executed manually (e.g., via the material testing workflow). In some examples, the test method(s) may be executed automatically, such as, for example, in response to expiration of a particular time limit and/or an indication that one or more of the sensors 126 are malfunctioning. In some examples, further test methods (e.g., for testing specimens 128) may be prohibited from executing if the test results of the sensor test method(s) indicate that one or more of the sensors 126 are malfunctioning. In some examples, the prohibition may continue until the test results of the sensor test method(s) indicate that all of the test sensors 126 are functioning correctly.

To aid in detecting malfunctioning of the sensors 126 that measure loads on the fixtures 122, a testing system sensor verification device 250 may be attached to the load string (e.g., via the grips 124 or other fixtures 122). The actuator 210 is controlled to actuate the testing system sensor verification device 250 via the grips 124 or other fixtures 122, while the controller 214 and/or the processing circuitry 224 monitor the force(s) measured by the sensor(s) 126.

In some examples, the testing system sensor verification device 250 is constructed, tuned, and/or calibrated to have a precise, repeatable response to forces applied by the actuator(s) 210. For example, the testing system sensor verification device 250 may include one or more springs having predetermined spring constants. The predetermined spring constant or other force response value(s) 236 may be stored in the memory circuitry 226 of the computing device 202. In some other examples, the testing system sensor verification device 250 may include: opposing or attracting magnets having predetermined characteristics (e.g., material, size, geometry, etc.); an electromagnet configured to generate a predetermined magnetic field and a corresponding force; a hydraulic piston; a pneumatic piston; and/or any other type of static and/or dynamic force-generating and/or force absorbing unit(s).

When the testing system sensor verification device 250 is attached, the example computing device 202 controls the actuator(s) 210 to apply force to the testing system sensor verification device 250 via the fixtures 122. For example, the actuator(s) 210 may be controlled to actuate the crosshead(s) 120 by a predetermined displacement or at a predetermined displacement rate. For example, for static force-generating devices such as one or more springs, the actuator 210 may be controlled to move the crosshead 120 a predetermined distance, which compresses one of the springs. The relationship between displacement may be substantially linear for springs or other force-generating devices that have low friction, or may be non-linear for springs or other force-generating devices that are subject to frictional forces in response to displacement. In some such examples, the different or change in force may be linearly related to the displacement. In another example for a dynamic force-generating device such as a pneumatic piston, the actuator 210 may be controlled to move the crosshead 120 at a predetermined displacement rate to cause a displacement-resisting force based on the characteristics of the fluid and the geometry in the pneumatic piston.

While the actuator(s) 210 apply force to the testing system sensor verification device 250, the sensor(s) 126 (e.g., load cell(s) coupled to the crosshead 120 and/or to the moving and/or static fixtures) measure the forces and output corresponding signals to the processing circuitry 224 (e.g., via the communication interfaces 218a, 218b). The processing circuitry 224 compares the measured forces to the predetermined forces (or forces calculated based on stored force response value(s) 236) to confirm that the sensors 126 are in a suitable condition to perform one more types of force testing. For example, the processing circuitry 224 may determine that the sensor 126 is suitable (e.g., sufficiently accurate) when the measured force is within a predetermined threshold difference or range of the stored force response value(s) 236. The processing circuitry 224 may determine the measured force for one or more displacement values or positions of the crosshead 120, and/or may determine the measured force for one or more types of force testing by actuating the crosshead 120 in different directions from a neutral position (e.g., tension in a first direction, compression in a second direction). For each of the displacement values in different directions, the processing circuitry 224 compares the measured force to a corresponding force response 136 stored in the memory circuitry 226.

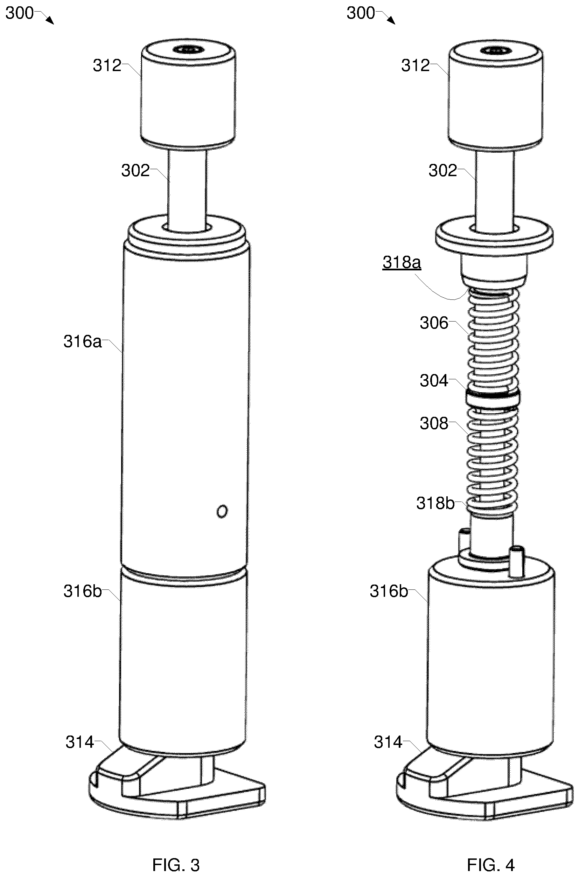

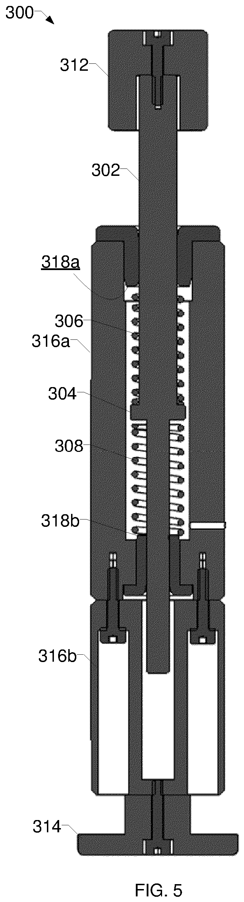

FIG. 3 is a perspective view of an example testing system sensor verification device 300 that may be used to implement the testing system sensor verification device 250 of FIG. 2. FIG. 4 is a view of the example testing system sensor verification device 300 with a portion of the body removed. FIG. 5 is a cross-sectional view of the example testing system sensor verification device 300.

The testing system sensor verification device 300 includes a shaft 302 having an actuator plate 304, first and second springs 306, 308, a body 310, and first and second fixture interfaces 312, 314. The testing system sensor verification device 300 is selectively coupled to the fixtures 122 of the testing machine 102 to provide predetermined test forces for verifying that the testing machine 102 (e.g., the sensors 126) are suitable for performing force testing.

In the illustrated example, the first fixture interface 312 is coupled to the shaft 302, and the second fixture interface 314 is coupled to the body 310. The example body 310 includes an interior portion 312, and may include a single segment, or multiple segments 316a, 316b as shown in FIGS. 3-5. The first fixture interface 312 actuates the shaft 302 and the actuator plate 304 with respect to the second fixture interface 314 and the body 310.

The first spring 306 is positioned between the actuator plate 304 and a first location on the body 310 (e.g., a first end of the first body segment 316a). Conversely, the second spring 308 is positioned between the actuator plate 304 and a second location on the body 310 (e.g., a second end of the first body segment 316a). In some examples, the body 310 may include one or more stop surfaces 318a, 318b against which the springs 306, 308 are set. As shown in FIGS. 4 and 5, the springs 306, 308 are positioned on opposite sides of the actuator plate 304. The actuator plate 304 includes engagement surfaces which engage the springs 306, 308.

The example first fixture interface 312 is configured to be engaged by a first type of grip 124 or fixture, while the second fixture interface 314 is configured to be engaged by a second type of fixture. The first fixture interface 312 is a cylindrical fixture interface, which may be engaged by grips having a V-shaped engagement surface. The second fixture interface 314 is configured to be engaged by a retention plate, which may not apply a lateral gripping force to the second fixture interface 314 but restrains movement of the second fixture interface 314 along a direction of travel of the crosshead(s) 120 (e.g., parallel to the axis of the shaft 302).

In some examples, the first and second fixture interfaces 312, 314 are removeable and replaceable with different types of fixture interfaces. For example, the first fixture interface 312 may be threaded onto the shaft 302, secured to the shaft 302 with one or more fasteners (e.g., bolts, clips, set screws, etc.), and/or otherwise removably attached to the shaft 302. Similarly, the second fixture interface 314 may be threaded onto the body 306, secured to the body 306 with one or more fasteners (e.g., bolts, clips, set screws, etc.), and/or otherwise removably attached to the body 306. For example, different fixture interfaces may include flat surfaces for interfacing with side action grips, wedge action grips, roller tensile grips, cord/yarn/rope/wire testing grips, webbing grips, fastener tensile grips, axial and/or torsion grips, capstan grips, O-ring grips, loop grips, and/or any other types of dynamic and/or static grips for tension, compression, torsion, or any other type of force testing. The fixture interfaces may be configured for use with static, manual, electronic, pneumatic, and/or hydraulic fixturing.

When the first and second fixture interfaces 312, 314 are secured to the fixtures 122 of the testing system 100, the processing circuitry 224 performs a load cell verification, which involves controlling the actuator(s) 210 to actuate a first fixture 122 coupled to the first fixture interface 312 and/or the second fixture 122 coupled to the second fixture interface 314 in a first direction while monitoring the output of the load cell. Actuating the crosshead 120 in the first direction (e.g., compression), which causes the first fixture interface 312 to move toward the second fixture interface 312. The displacement of the first fixture interface 312 causes the shaft 302 and the actuator plate 304 to compress the second spring 308 against the body 310. During and/or after the displacement by the actuator(s) 210, the sensor(s) 126 (e.g., one or more load cells coupled to the first and/or second fixture interfaces 312, 314) monitor the force and output signals representative of the monitored force to the processing circuitry 224. The processing circuitry 224 may control the actuator(s) 210 to move the crosshead by a first displacement, and then pause before moving the crosshead again by the same or a different displacement to perform a second measurement. Each displacement is associated with a corresponding force response 236, which is compared to the measured force by the processing circuitry 224 to determine whether the sensors 126 are suitable for force testing.

After measuring the force at one or more positions in a first direction (e.g. compressing the second spring 308), the processing circuitry 224 may further control the actuator(s) 210 to actuate the first and/or second fixtures 122 in a second direction while monitoring the output of the load cell. For example, the processing circuitry 224 may control the actuator(s) 210 to return to the neutral or starting position and actuate the crosshead 120 in a second direction (e.g., tension), which causes the first fixture interface 312 to move away from the second fixture interface 312. The displacement of the first fixture interface 312 causes the shaft 302 and the actuator plate 304 to compress the first spring 308 against the body 310.

In some examples, in response to determining that the one or more force(s) measured by the sensors 126 (e.g., the load cell) are within a predetermined range of one or more corresponding predetermined force(s) associated with the load cell verification device, the processing circuitry 224 indicates (e.g., via the UI 204) that the testing system 108 is in suitable condition to perform one or more type(s) of force testing. For example, if the forces measured by the load cell are within threshold ranges of corresponding stored values of the force response 236 for displacements corresponding to tension and compression, the processing circuitry 224 may output an indication via the UI 204, such as text or a graphic, that the testing system has been verified to be suitable for tension and compression testing. Conversely, if the forces measured by the load cell outside of the threshold ranges for one or more of the displacement values, the processing circuitry 224 outputs an indication that that the testing system 108 is not in suitable condition to perform the one or more type(s) of force testing.

In some examples, the processing circuitry 224 may authorize or deauthorize the testing machine 102 to perform certain types of tests based on the comparisons of the measured forces and the force responses 236. For example, an authorized system may be permitted to certify test results for tests for which such certification is required, or to generate reports associated with test results for traceability purposes. Conversely, a deauthorized system may be permitted to perform tests (e.g., for diagnostic or other purposes), but may not be permitted to certify test results or generate useability reports.

Additionally or alternatively, the processing circuitry 224 may enable or disable the testing machine 102 to perform certain types of tests based on the comparisons of the measured forces and the force responses 236. For example, an enabled system may be permitted to perform tests which have been verified using the testing system sensor verification device 250, and the control panel 216 and/or the UI 204 include and/or enable inputs that allow an operator (or automated process) to perform the tests with the enabled system. Conversely, the processing circuitry 224 may disable the testing machine 102 from performing some or all types of tests, such as by disabling (e.g., locking, depowering) the actuator(s) 210 and/or other elements of the material testing machine 102 necessary to perform the disabled tests. Additionally or alternatively, the control panel 216 and/or the UI 204 may remove and/or disable inputs that allow an operator to control the machine 102 to perform tests.

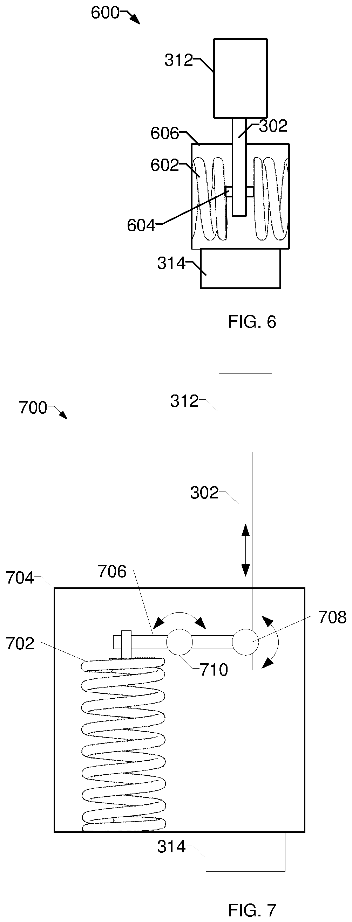

While an example testing system sensor verification device 300 is illustrated in FIGS. 3-5, other types of force-generating devices may be used to implement the testing system sensor verification device 250. FIGS. 6, 7, 8, and 9 illustrate other example implementations of the testing system sensor verification device 250.

FIG. 6 is a schematic diagram of another example testing system sensor verification device 600 that may be used to implement the testing system sensor verification device 250 of FIG. 2 using a torsion spring as a bidirectional force-generating device. The example testing system sensor verification device 600 includes the shaft 302, the first fixture interface 312, and the second fixture interface 314 described above with reference to FIGS. 3-5, and which may be modified as disclosed above.

Instead of one or more compression and/or expansion springs 306, 308 as in the example of FIGS. 3-5, the example testing system sensor verification device 600 includes a torsion spring 602 as a force-generating device. The torsion spring 602 is coupled to a body 604, and the body 604 is coupled to the second fixture interface 314, such that the torsion spring 602, the body 604, and the second fixture interface 314 are stationary with respect to each other.

The example shaft 302 of FIG. 6 is coupled to the torsion spring 602 via a linkage 606. The example linkage 606 may couple to the torsion spring 602 in a middle of the spring 602, at the end of the spring 602, and/or between multiple springs 602 coupled to the body 604. In the illustrated example, the torsion spring 602 is in a neutral state or position. As the shaft 302 is displaced in either direction via the actuator 210 during the verification process, the torsion spring 602 is torqued in the corresponding direction by the shaft 302 and the linkage 606, causing the torsion spring 602 to generate a force response that is measured by the load cell sensor(s) 126 coupled to the first and/or second fixture interfaces 312, 314.

FIG. 7 is a schematic diagram of another example testing system sensor verification device 700 that may be used to implement the testing system sensor verification device 250 of FIG. 2 using spring as a bidirectional force-generating device coupled to a shaft via a lever. The example testing system sensor verification device 700 includes the shaft 302, the first fixture interface 312, and the second fixture interface 314 described above with reference to FIGS. 3-5, and which may be modified as disclosed above.

Instead of one or more compression and/or expansion springs 306, 308 as in the example of FIGS. 3-5, the example testing system sensor verification device 700 includes a single bidirectional spring 702 as a force-generating device. The spring 702 is coupled to a body 704, and the body 704 is coupled to the second fixture interface 314, such that the spring 702, the body 704, and the second fixture interface 314 are stationary with respect to each other.

The example shaft 302 of FIG. 7 is coupled to the spring 702 via a linkage, which includes a lever 706 and a rotation linkage 708 coupling the lever 706 to the shaft 302. The lever 706 is further coupled to the spring 702 on an opposite side of a fulcrum 710, which rotationally couples the lever 706 to the body 704. The linear motion of the shaft 302 causes the lever 706 to rotate, which imparts opposing force on the spring 702.

The example spring 702 may be in a neutral position prior to performing a verification method, or may be preloaded. As the shaft 302 is displaced in either direction via the actuator 210 during the verification process, the shaft 302 and the lever 706 apply tension and/or compression force to the spring 702, causing the spring 702 to generate a force response that is measured by the load cell sensor(s) 126 coupled to the first and/or second fixture interfaces 312, 314.

While the example testing system sensor verification device 700 uses a lever to link the shaft 302 and the spring 702, in other examples a single unidirectional or bidirectional spring may be linked or coupled to the shaft using other types of linkages.

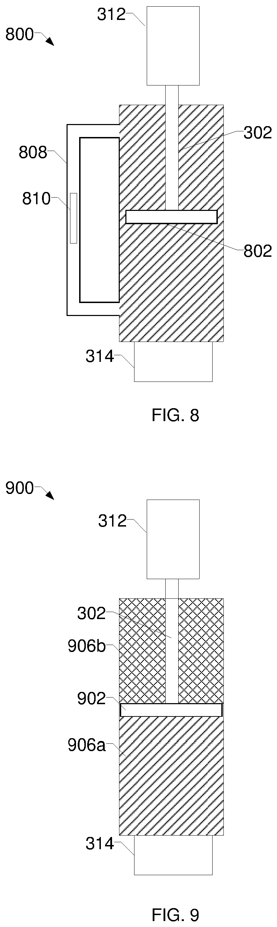

FIG. 8 is a schematic diagram of another example testing system sensor verification device 800 that may be used to implement the testing system sensor verification device 250 of FIG. 2 using a hydraulic piston 802. The example testing system sensor verification device 800 includes the shaft 302, the first fixture interface 312, and the second fixture interface 314 described above with reference to FIGS. 3-5, and which may be modified as disclosed above.

The example testing system sensor verification device 800 includes a hydraulic piston 802 as a dynamic force-generating device. The piston 802 is coupled to the shaft 302 within a body 804, and the body 804 is coupled to the second fixture interface 314. The body 804 is at least partially filled with hydraulic fluid 806. The body 804 further includes a fluid channel 808 linking the body 804 at locations on opposite sides of the piston 802. As the piston 802 is actuated by the shaft 302, the fluid 806 is pushed through the fluid channel 808 by the piston 802 according to the speed at which the piston 802 moves.

In addition or as an alternative to the fluid channel 808, the piston 802 and/or the body 804 may be dimensioned to permit the fluid 806 to flow around piston 802, through the piston 802, and/or through other paths across the plane of the piston 802.

In the example of FIG. 8, the fluid channel 808 may be provided with a flow restrictor 810 to increase the force required by the piston 802 to push the fluid 806 through the fluid channel 808. The example stored force response 236 of FIG. 2 may be determined based on the dimensions of the piston 802 and the body 804, the characteristics of the hydraulic fluid 806, the dimensions of the fluid channel 808, and/or the characteristics of the flow restrictor 810.

As the shaft 302 is displaced in either direction via the actuator 210 during the verification process, the shaft 302 and the piston 802 push the fluid 806 through the fluid channel 808, resulting in a dynamic force response that is measured by the load cell sensor(s) 126 coupled to the first and/or second fixture interfaces 312, 314. The example processing circuitry 224 may compare the dynamic measured force (e.g., rate of force increase and/or decay, peak measured force, average measured force, etc.) with a calculated dynamic force response.

While the example disclosed above is described as a hydraulic piston, in other examples a compressible fluid may be used to measure the dynamic measured force.

FIG. 9 is a schematic diagram of another example testing system sensor verification device 900 that may be used to implement the testing system sensor verification device 250 of FIG. 2 using a pneumatic piston 902 as a force-generating device. The example testing system sensor verification device 900 includes the shaft 302, the first fixture interface 312, and the second fixture interface 314 described above with reference to FIGS. 3-5, and which may be modified as disclosed above.

The example testing system sensor verification device 900 includes a pneumatic piston 902 as a dynamic force-generating device. The piston 902 is coupled to the shaft 302 within a body 904, and the body 904 is coupled to the second fixture interface 314. The body 904 is at least partially filled with compressible fluid 906, such as a predetermined gas having a predetermined density and pressure. In some examples, the piston 902 is filled on both sides of the piston 902 with gases of the same or different characteristics, but which are not permitted to traverse the plane of the piston 902. As the piston 902 is actuated by the shaft 302, the fluid 906 in the direction of travel of the piston 902 is compressed within the body 904, causing a static force response that can be measured by the load cell(s) coupled to the first and/or second fixture interfaces 312, 314.

As the shaft 302 is displaced in either direction via the actuator 210 during the verification process, the shaft 302 and the piston 902 compress the fluid 906a, 906b in one of the subvolumes of the body 904, resulting in a force response that is measured by the load cell sensor(s) 126 coupled to the first and/or second fixture interfaces 312, 314.

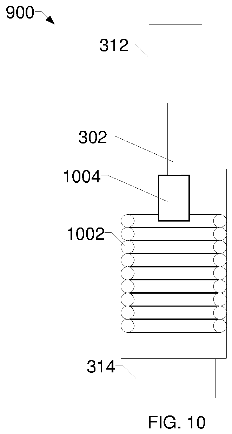

FIG. 10 is a schematic diagram of another example testing system sensor verification device 1000 that may be used to implement the testing system sensor verification device 250 of FIG. 2 using an electromagnetic coil 1002 as a force-generating device. The example testing system sensor verification device 1000 includes the shaft 302, the first fixture interface 312, and the second fixture interface 314 described above with reference to FIGS. 3-5, and which may be modified as disclosed above.

The example testing system sensor verification device 1000 includes an electromagnetic coil 1002 as a force-generating device. A ferromagnetic target 1004 is coupled to the shaft 302, and may be actuated to different positions along a length of the electromagnetic coil 1002. The electromagnetic coil 1002 may be powered (e.g., via connecting the electromagnetic coil 1002 to a power source, which may be provided by the computing system 200 and/or the testing machine 102, or a separate power source such as a wall plug or battery). The current and polarity of the power provided to the electromagnetic coil 1002 and the position of the target 1004 along the electromagnetic coil 1002 results application of a magnetic force to the target 1004.

The target 1004 may be actuated to different positions via the shaft 302, while current is applied to the coil for generating an electromagnetic force on the target 1004. The force is a static force response that can be measured by the load cell(s) coupled to the first and/or second fixture interfaces 312, 314, and compared to a predetermined force corresponding to the current and polarity parameters, and based on the displacement of the target 1004.

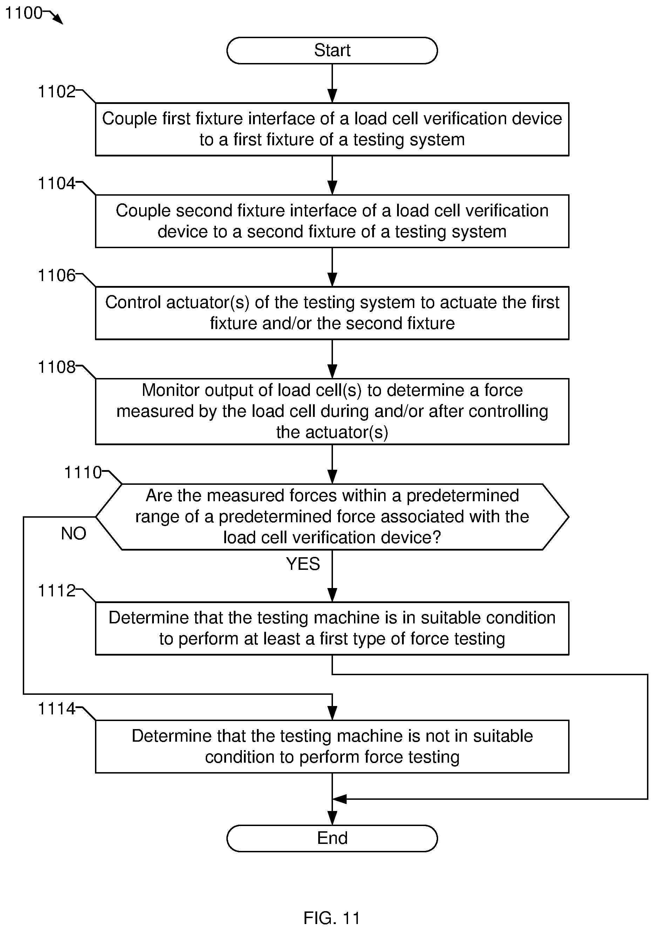

FIG. 11 is a flowchart representative of an example method 1100 to perform test machine verification. The example method 1100 may be performed to verify that the testing system 100 of FIGS. 1 and/or 2 is suitable for performing one or more types of force tests.

At block 1102, a first fixture interface (e.g., the first fixture interface 312) of a load cell verification device (e.g., the load cell verification devices 300, 600-1000) is coupled to a first fixture (e.g., the fixtures 122) of a testing system (e.g., the test machine 102 of FIGS. 1 and/or 2). At block 1104, a second fixture interface (e.g., the second fixture interface 314) of a load cell verification device (e.g., the load cell verification devices 300, 600-1000) is coupled to a second fixture (e.g., the fixtures 122) of a testing system (e.g., the test machine 102 of FIGS. 1 and/or 2). In some examples, the first and/or second fixture interfaces 312, 314 are selected and installed on the load cell verification device to match the fixtures 122, or the fixtures 122 is selected and installed to match the first and/or second fixture interfaces 312, 314.

At block 1106, the processing circuitry 224 controls actuator(s) of the testing system (e.g., the actuator(s) 210) to actuate the at least one of the first fixture or the second fixture. For example, the processing circuitry 224 may control the actuator 210 to move the crosshead 120 by a predetermined displacement corresponding to a displacement value of a stored force response 236.

At block 1108, while controlling the actuator 210 (e.g., for dynamic force measurement) or after controlling the actuator 210 (e.g., for static force measurement), the processing circuitry 224 monitors an output of a load cell (e.g., the sensors 126) of the testing machine 102 to determine a force measured by the load cell. For example, based on the type of load cell verification device 300, 600-1000, the processing circuitry 224 may monitor for dynamic forces and/or static forces for comparing against the stored force responses 236.

At block 1110, the processing circuitry 224 determines whether the measured forces are within a predetermined range of a predetermined force associated with the load cell verification device 300, 600-1000. For example, the processing circuitry 224 may look up or calculate an expected force response based on the force measurements taken by the load cell(s) at selected displacement values and/or selected displacement rates. The expected force response may be based on a precise, calibrated response expected for the load cell verification device 300, 600-1000 to ensure repeatability of the verification process.

If the measured forces are within a predetermined range of a predetermined force (block 1110), at block 1112, the processing circuitry 224 determines that the testing machine 102 is in suitable condition to perform at least a first type of force testing (e.g., types of testing corresponding to the verification test performed).

If the measured forces are not within a predetermined range of a predetermined force (block 1110), at block 1114, the processing circuitry 224 determines that the testing machine 102 is not in suitable condition to perform force testing. In some examples, prior to determining that the testing machine is not in suitable condition following determining that the measured forces are not within the predetermined range (block 1110), blocks 1102-1110 may be performed using a secondary verification device 300, 600-1000. If the measured forces are not within the predetermined range for both the primary and secondary verification devices 300, 600-1000, the processing circuitry 224 may determine that the testing machine 102 is not in suitable condition to perform force testing. For example, the test sensor 126 may require calibration, repair, or replacement. Conversely, if the measured forces are not within the predetermined range for the primary verification device 300, 600-1000, but the measured forces are within the predetermined range for the second verification device 300, 600-1000, the processing circuitry 224 may determine that the testing machine 102 is in suitable condition to perform force testing and the primary verification device 300, 600-1000 may require repair or replacement.

In some examples, the processing circuitry 224 may output and indications of the measured forces and/or the determinations via the UI 204.

After determining whether the testing machine 102 is in suitable condition to perform force testing (block 1112, 1114), the example processing circuitry 224 may control the testing machine 102 to perform force testing on one or more specimens and/or may require a replacement of the sensors 126 and a re-verification prior to performing force testing.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general-purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.
Certain embodiments of the invention are described in the following clauses:
Clause 1. A testing system sensor verification device, comprising:
   a shaft;
   a body; and
   a force generator having a first predetermined force response, the first force generator coupled to the shaft and the body such that actuation of the shaft in a first direction from a predetermined position causes the force generator to generate the first predetermined force response.
Clause 2. The sensor verification device as defined in clause 1, further comprising:
   a first fixture interface coupled to the shaft; and
   a second fixture interface coupled to the body.
Clause 3. The sensor verification device as defined in clause 1, wherein the force generator comprises:
   a first spring having a first predetermined force response, the first force generator positioned between the actuator plate and a first location on the body such that actuation of the shaft in a first direction from a predetermined position compresses the first spring; and
   a second spring having a second predetermined spring constant, the second spring positioned between the actuator plate and a second location on the body such that actuation of the shaft in a second direction from the predetermined position compresses the second spring.
Clause 4. The sensor verification device as defined in clause 3, wherein the first predetermined spring constant is the same as the second predetermined spring constant.
Clause 5. The sensor verification device as defined in clause 3, wherein the first predetermined spring constant is different than the second predetermined spring constant.
Clause 6. The sensor verification device as defined in clause 3, wherein the shaft extends through the first spring and the second spring.
Clause 7. The sensor verification device as defined in clause 6, wherein the first spring is on an opposite side of the actuator plate from the second spring.
Clause 8. A testing system, comprising:
   a frame;
   a first fixture and a second fixture configured to grip a specimen;
   an actuator configured to actuate at least one of the first fixture or the second fixture to apply a force to the specimen;
   a load cell configured to measure at least a portion of the force applied to the specimen by the actuator; and
   processing circuitry configured to:
      control the actuator to actuate the at least one of the first fixture or the second fixture to apply the force to the specimen; and
      perform a load cell verification, comprising:
         controlling the actuator to actuate the at least one of the first fixture or the second fixture while a load cell verification device is coupled to the first fixture and the second fixture;
         while controlling the actuator, monitor an output of the load cell to determine a force measured by the load cell; and
         in response to determining that the force measured by the load cell is within a predetermined range of a predetermined force associated with the load cell verification device, indicating the testing system is in suitable condition to perform at least a first type of force testing.
Clause 9. The testing system as defined in clause 8, wherein the processing circuitry is configured to perform the load cell verification, further comprising:
   controlling the actuator to actuate the at least one of the first fixture or the second fixture in a first direction while monitoring the output of the load cell; and
   controlling the actuator to actuate the at least one of the first fixture or the second fixture in a second direction while monitoring the output of the load cell.
Clause 10. The testing system as defined in clause 9, wherein the processing circuitry is configured to monitor a tension force measured by the load cell in the first direction and monitor a compression force measured by the load cell in the second direction.
Clause 11. The testing system as defined in clause 8, wherein the second fixture is configured to be stationary, and the actuator is configured to actuate the first fixture.
Clause 12. The testing system as defined in clause 11, wherein the load cell is coupled to the first fixture or the second fixture.
Clause 13. The testing system as defined in clause 8, wherein the load cell verification device comprises:
   a shaft;
   a body; and
   a force generator having a first predetermined force response, the first force generator coupled to the shaft and the body such that actuation of the shaft in a first direction from a predetermined position causes the force generator to generate the first predetermined force response.
Clause 14. The testing system as defined in clause 13, wherein the load cell verification device further comprises:
   a first fixture interface coupled to the shaft; and
   a second fixture interface coupled to the body.
Clause 15. The testing system as defined in clause 13, wherein the shaft comprises an actuator plate, and the force generator comprises:
   a first spring having a first predetermined spring constant, the first spring positioned between the actuator plate and a first location on the body such that actuation of the shaft in a first direction from a predetermined position compresses the first spring; and
   a second spring having a second predetermined spring constant, the second spring positioned between the actuator plate and a second location on the body such that actuation of the shaft in a second direction from the predetermined position compresses the second spring.
Clause 16. The testing system as defined in clause 15, wherein the first fixture is configured to couple to the first fixture interface, and the second fixture is configured to couple to the second fixture interface.
Clause 17. The testing system as defined in clause 15, wherein the first predetermined spring constant is different than the second predetermined spring constant.
Clause 18. The testing system as defined in clause 15, wherein the shaft extends through the first spring and the second spring.
Clause 19. The testing system as defined in clause 15, wherein the first spring is on an opposite side of the actuator plate from the second spring.
Clause 20. A method to verify a load cell in a testing system, the method comprising:
   coupling a first fixture interface of a load cell verification device to a first fixture of a testing system;
   coupling a second fixture interface of a load cell verification device to a second fixture of a testing system;
   controlling, via processing circuitry, an actuator of the testing system to actuate the at least one of the first fixture or the second fixture;
   during or after controlling the actuator, monitoring, via the processing circuitry, an output of a load cell of the testing system to determine a force measured by the load cell; and
   in response to determining that the force measured by the load cell is within a predetermined range of a predetermined force associated with the load cell verification device, determining that the testing system is in suitable condition to perform at least a first type of force testing.

## Claims

1. A testing system sensor verification device, comprising:
a shaft;
a body; and
a force generator having a first predetermined force response, the first force generator coupled to the shaft and the body such that actuation of the shaft in a first direction from a predetermined position causes the force generator to generate the first predetermined force response.

2. The sensor verification device as defined in claim 1, further comprising:
a first fixture interface coupled to the shaft; and
a second fixture interface coupled to the body.

3. The sensor verification device as defined in claim 1 or claim 2, wherein the force generator comprises:
a first spring having a first predetermined force response, the first force generator positioned between the actuator plate and a first location on the body such that actuation of the shaft in a first direction from a predetermined position compresses the first spring; and
a second spring having a second predetermined spring constant, the second spring positioned between the actuator plate and a second location on the body such that actuation of the shaft in a second direction from the predetermined position compresses the second spring.

4. The sensor verification device as defined in claim 3, wherein the first predetermined spring constant is the same as the second predetermined spring constant, or wherein the first predetermined spring constant is different than the second predetermined spring constant.

5. The sensor verification device as defined in claim 3 or claim 4, wherein the shaft extends through the first spring and the second spring, and/or wherein the first spring is on an opposite side of the actuator plate from the second spring.

6. A testing system, comprising:
a frame;
a first fixture and a second fixture configured to grip a specimen;
an actuator configured to actuate at least one of the first fixture or the second fixture to apply a force to the specimen;
a load cell configured to measure at least a portion of the force applied to the specimen by the actuator; and
processing circuitry configured to:
control the actuator to actuate the at least one of the first fixture or the second fixture to apply the force to the specimen; and
perform a load cell verification, comprising:
controlling the actuator to actuate the at least one of the first fixture or the second fixture while a load cell verification device is coupled to the first fixture and the second fixture;
while controlling the actuator, monitor an output of the load cell to determine a force measured by the load cell; and
in response to determining that the force measured by the load cell is within a predetermined range of a predetermined force associated with the load cell verification device, indicating the testing system is in suitable condition to perform at least a first type of force testing.

7. The testing system as defined in claim 6, wherein the processing circuitry is configured to perform the load cell verification, further comprising:
controlling the actuator to actuate the at least one of the first fixture or the second fixture in a first direction while monitoring the output of the load cell; and
controlling the actuator to actuate the at least one of the first fixture or the second fixture in a second direction while monitoring the output of the load cell, and optionally
wherein the processing circuitry is configured to monitor a tension force measured by the load cell in the first direction and monitor a compression force measured by the load cell in the second direction.

8. The testing system as defined in claim 6 or claim 7, wherein the second fixture is configured to be stationary, and the actuator is configured to actuate the first fixture, and/or wherein the load cell is coupled to the first fixture or the second fixture.

9. The testing system as defined in any one of claims 6 to 8, wherein the load cell verification device comprises:
a shaft;
a body; and
a force generator having a first predetermined force response, the first force generator coupled to the shaft and the body such that actuation of the shaft in a first direction from a predetermined position causes the force generator to generate the first predetermined force response.

10. The testing system as defined in claim 9, wherein the load cell verification device further comprises:
a first fixture interface coupled to the shaft; and
a second fixture interface coupled to the body.

11. The testing system as defined in claim 9 or claim 10, wherein the shaft comprises an actuator plate, and the force generator comprises:
a first spring having a first predetermined spring constant, the first spring positioned between the actuator plate and a first location on the body such that actuation of the shaft in a first direction from a predetermined position compresses the first spring; and
a second spring having a second predetermined spring constant, the second spring positioned between the actuator plate and a second location on the body such that actuation of the shaft in a second direction from the predetermined position compresses the second spring.

12. The testing system as defined in claim 11, wherein the first fixture is configured to couple to the first fixture interface, and the second fixture is configured to couple to the second fixture interface.

13. The testing system as defined in claim 11 or claim 12, wherein the first predetermined spring constant is different than the second predetermined spring constant.

14. The testing system as defined in any one of claims 11 to 13, wherein the shaft extends through the first spring and the second spring, and/or wherein the first spring is on an opposite side of the actuator plate from the second spring.

15. A method to verify a load cell in a testing system, the method comprising:
coupling a first fixture interface of a load cell verification device to a first fixture of a testing system;
coupling a second fixture interface of a load cell verification device to a second fixture of a testing system;
controlling, via processing circuitry, an actuator of the testing system to actuate the at least one of the first fixture or the second fixture;
during or after controlling the actuator, monitoring, via the processing circuitry, an output of a load cell of the testing system to determine a force measured by the load cell; and
in response to determining that the force measured by the load cell is within a predetermined range of a predetermined force associated with the load cell verification device, determining that the testing system is in suitable condition to perform at least a first type of force testing.
